# EUROPÄISCHE PATENTSCHRIFT

(11) **EP 0 944 524 B1**
(45) Veröffentlichungstag und Bekanntmachung des Hinweises auf die Patenterteilung: **07.03.2001**
(21) Anmeldenummer: 97952718.1
(22) Anmeldetag: 11.12.1997
(51) Int. Cl.: B65B 11/00, B29C 53/68

(54) **VERFAHREN ZUR HERSTELLUNG EINES ENDLOSEN KUNSTSTOFFSCHLAUCHES**
MANUFACTURE OF AN ENDLESS PLASTIC PIPE
FABRICATION D'UN TUYAU PLASTIQUE EN CONTINU

(30) Priorität: 13.12.1996 DE 19652054
(43) Veröffentlichungstag der Anmeldung: 29.09.1999
(73) Patentinhaber: Oggesen, Heinrich, 22607 Hamburg (DE)
(72) Erfinder: Oggesen, Heinrich, 22607 Hamburg (DE)
(74) Vertreter: LOUIS, PÖHLAU, LOHRENTZ & SEGETH
(86) Internationale Anmeldenummer: DE9702901
(87) Internationale Veröffentlichungsnummer: WO9825825

(56) Entgegenhaltungen:
- EP-A- 0 140 301
- EP-A- 0 224 766
- US-A- 4 058 427
- US-A- 4 409 776
- US-A- 4 553 374
- US-A- 4 593 518
- US-A- 5 155 970
- US-A- 5 433 058

## Beschreibung

Die Erfindung betrifft ein Verfahren zur Herstellung eines Schlauches aus Kunststoff-Folienmaterial, wobei eine äußere und eine innere Kunststoff-Folienbahn schraubenlinienförmig, axial gegeneinander versetzt, sich überlappend gewickelt werden.

Ein Schlauch aus Kunststoff-Folienmaterial kann bspw. dadurch hergestellt werden, daß ein Folienstreifen um eine zu seiner Längsrichtung parallele Achse aufgebogen wird und die beiden Längsränder dann miteinander verschweißt werden. Eine solche Längsverschweißung erlaubt jedoch nur eine begrenzte Streckung bzw. Reckung der Folie, so daß die mechanische Festigkeit der Folie bzw. des Schlauches aus Kunststoff-Folienmaterial Wünsche offen läßt.

Aus der EP 0 005 278 B1 ist ein Verfahren zur Herstellung eines Schlauches bekannt, wobei eine äußere und eine innere Kunststoff-Folienbahn gemeinsam mit einem ersten und einem zweiten Draht gewickelt werden. Der erste und der zweite Draht werden parallel schraubenförmig zweigängig angeordnet, wobei sich die aufeinanderfolgenden Windungen abwechseln. Die innere Kunststoff-Folienbahn wird schraubenförmig um das von den Windungen der ersten Drähte gebildete rohrförmige Längenstück gewickelt, wobei die innere Kunststoff-Folienbahn breiter ist als der Doppelgang jedes Drahtes. Der vordere und der hintere Randabschnitt der inneren Kunststoff-Folienbahn überlappen einander über den Windungen des ersten Drahtes. Die äußere Kunststoff-Folienbahn ist schraubenförmig um die innere Kunststoff-Folienbahn gewickelt und breiter als die doppelte Ganghöhe der Drähte. Der vordere und der hintere Randabschnitt der äußeren Kunststoff-Folienbahn überlappen einander über den Windungen des zweiten Drahtes.

Aus der EP 0 315 506 A1 ist ein Verfahren zur Herstellung von Rohrstücken aus Kunststoff-Folienbahnen bekannt, wobei eine Anzahl Kunststoff-Folienbahnen schraubenlinienförmig, axial gegeneinander versetzt, sich überlappend, auf einen langen Dorn aufgewickelt werden. Nach einer Wärmebehandlung zur Polymerisation erfolgt ein Auseinandertrennen in die einzelnen Rohrstücke.

Die EP 0 027 677 A1 beschreibt ein Verfahren zur Herstellung von Verpackungsbehältern aus bandförmigem Material, bestehend aus einer Polyesterfolie mit monoaxialer Molekülorientierung. Das Polyesterband wird spiralförmig auf einen Dorn gewickelt, um einen Schlauch zu bilden. Die Randzonen der aufeinanderfolgenden Windungen des Folienbandes wird zu höchstens 15 % der Bandbreite in gegenseitige Überlappung gebracht. Die Verbindung erfolgt mittels eines Klebers oder mittels einer Oberflächenverschmelzung im Überlappungsbereich der Windungen. Der gebildete Schlauch wird zu hülsenförmigen Behälterkörpern bestimmter Länge zugeschnitten. Die hülsenförmigen Behälterkörper werden mit Endwänden versehen, welche die Hülsenöffnungen verschließen. Bei diesem Verfahren wird nur ein Folienband auf den erwähnten Dorn aufgebracht. Die Breite des Folienbandes beträgt 75 bis 150 % des Schlauchdurchmessers. Das Abdichten der Überlappungszonen erfolgt mit Hilfe ortsfester Dichtungselemente, die in bestimmter Beziehung zueinander angeordnet sind, und deren Lage so gewählt ist, daß sie nahe an der Überlappungszone positioniert sind, die kontinuierlich an den Dichtungselementen vorbeigeführt wird.

Ein Verfahren zur Herstellung eines Schlauches aus einer Kunststoff-Folienbahn ist auch aus der FR-A 2 464 820 bekannt. Auch dort kommt nur eine einzige Kunststoff-Folienbahn zur Anwendung, die bspw. auch überlappend gewickelt wird.

Aus der US-A-4 058 427 ist eine Vorrichtung bekannt, die zum Umwickeln eines Rohres mit mindestens einem Wickelstreifen vorgesehen ist. Der mindestens eine Wickelstreifen ist einseitig mit einem Kleber beschichtet. Die Kleberbeschichtung ist ursprünglich mit einem Abdeckstreifen bedeckt. Der mit dem Abdeckstreifen bedeckte Wickelstreifen ist auf einen Wickeldom aufgewickelt, der an der Vorrichtung gelagert ist. Im Betrieb der Vorrichtung wird der Abdeckstreifen vom Wickelstreifen abgezogen und der Wickelstreifen mit seiner Kleberbeschichtung am zu umwickelnden Rohr festgelegt. Diese bekannte Vorrichtung dient also nicht zur Herstellung eines Schlauches sondern zum Umwickeln eines Rohres.

Die EP-A-0 224 766 beschreibt ein Wickelverfahren zum Umwickeln eines Stapels bzw. eines Gebindes aus einer Anzahl Gegenstände, wobei das jeweilige Gebinde an Wickelstationen mit einer Folie umwickelt wird. Auch hier handelt es sich nicht um ein Verfahren zur Herstellung eines Schlauches, insbesondere eines endlosen Schlauches, sondern um ein Verfahren zum Umwickeln eines formstabilen Stapels bzw. Gebindes.

Aus der US-A-5 155 970 ist ein Verfahren zum Umwickeln eines Gegenstandes mit einem Folienstreifen bekannt, der an einer Seite eine Kleberbeschichtung aufweist. Der Folienstreifen wird auf den Gegenstand aufgewickelt, wobei die Kleberbeschichtung vom Gegenstand abgewandt ist. Nach diesem ersten Aufwickelvorgang wird der Folienstreifen derartig umgekehrt, daß die Kleberbeschichtung dem Gegenstand zugewandt ist. Gleichzeitig wird die Wickelrichtung umgekehrt, so daß sich eine zweilagige Wicklung aus einem einzigen Folienstreifen ergibt, wobei die Kleberbeschichtungen der beiden Wickellagen einander zugewandt vorgesehen sind und die Innen- und die Außenseite der zweilagigen Wicklung kleberfrei ist. Bei diesem bekannten Verfahren wird also aus einem einzigen Folienstreifen ein zweilagiges Wickelgebilde endlicher Länge hergestellt.

Die US-A-4 409 776 offenbart ein Verfahren und eine Vorrichtung zum Umwickeln von Gegenständen mit einem Streifenmaterial, das an einer Seite mit einem Kleber versehen ist. Hierbei wird das Streifenmaterial in einem ersten Verfahrensschritt spiralförmig um den Gegenstand herumgewickelt, wobei der Kleber auf der vom Gegenstand abgewandten Seite des Streifenmaterials vorgesehen ist. Nach Abschluß dieses ersten Verfahrensschrittes wird das Streifenmaterial um 180° gedreht und spiralförmig am Gegenstand zurückgewickelt. Auf diese Weise ergibt sich - wie bei der oben genannten US-A-5 155 970 - eine zweilagige Umhüllung des Gegenstandes derart, daß die beiden Lagen durch ihre Kleberbeschichtung miteinander verbunden und die Innen- und die Außenseite der zweilagigen Umhüllung kleberfrei ist. Auch hier wird nur ein einziger Streifen verwendet, um den Gegenstand zu umhüllen. Zur Herstellung eines endlosen Schlauches ist auch dieses bekannte Verfahren nicht geeignet.

Der Erfindung liegt die Aufgabe zugrunde, ein Verfahren der eingangs genannten Art zu schaffen, das eine vergleichsweise starke Vorstreckung bzw. Vorreckung der Kunststoffolie erlaubt, so daß sich die mechanische Festigkeit des hergestellten Schlauches erheblich steigern läßt, wobei der erfindungsgemäß hergestellte Schlauch zur Verpackung und zum Schutz der verpackten Güter ausgezeichnet geeignet ist.

Diese Aufgabe ist bei einem gattungsgemäßen Verfahren dadurch gelöst, daß mindestens eine der beiden voneinander unabhängigen, gleichzeitig gewickelten Kunststoff-Folienbahnen an ihrer der anderen Kunststoff-Folienbahn zugewandten Seite einen Kleber aufweist, und die Kunststoff-Folienbahnen so gewickelt werden, daß der Schlauch an seiner Außen- und an seiner Innenseite kleberfrei ist. Bei der Durchführung dieses Verfahrens kann eine äußere und eine innere Kunststoff-Folienbahn zur Anwendung gelangen, von welchen jede an ihrer der anderen Kunststoff-Folienbahn zugewandten Seite einen Kleber aufweist. Bei dem besagten Kleber handelt es sich um eine Klebeschicht oder um Haftadditive.

In vorteilhafter Weise gelangen anstelle von zwei Kunststoff-Folienbahnen drei Kunststoff-Folienbahnen zur Anwendung, d.h. eine mittlere Kunststoff-Folienbahn, die an ihren beiden Seiten jeweils einen Kleber aufweist wird, mit einer äußeren und einer inneren Kunststoff-Folienbahn schraubenlinienförmig, axial gegeneinander versetzt, sich überlappend gleichzeitig derart gewickelt, daß der Schlauch an seiner Außen- und an seiner Innenseite kleberfrei ist.

Erfindungsgemäß werden also mindestens zwei Kunststoff-Folienbahnen schraubenlinienförmig derartig gewickelt, daß ein Schlauch entsteht, dessen Außenseite und dessen Innenseite frei von Klebeschichten oder Haftadditiven ist. Dadurch, daß die Außen- und die Innenseite des erfindungsgemäß hergestellten Schlauches frei von Klebeschichten oder Haftadditiven ist, ergibt sich der Vorteil, daß der Schlauch problemlos wunschgemäß verschweißbar sind. Ein weiterer Vorteil des erfindungsgemäß hergestellten Schlauches, der an seiner Außen- und Innenseite von Klebeschichten oder Haftadditiven frei ist, besteht darin, daß der Schlauch problemlos von einem Wickelkanalelement abziehbar ist. Dadurch, daß die Innenseite des erfindungsgemäß hergestellten Kunststoffolien-Schlauches frei von Klebeschichten oder Haftadditiven ist, ergibt sich eine ausgezeichnete Gleitfähigkeit der inneren Kunststoff-Folienbahn und des fertigen Schlauches. Diese Gleitfähigkeit ist insbes. dann von Bedeutung bzw. vorteilhaft, wenn bei einer Bewicklung eines zu verpackenden Gutes auf das Packgut kein Kleber gelangen soll. Der Schlauch kann auf dem Wickelkanalelement vorgefertigt und von diesem abgezogen wird.

Der durch die Verklebung von zwei oder drei Folienbahnen erfindungsgemäß hergestellte Schlauch kann zum Schutz bzw. zur Verpackung beliebiger Güter wie bspw. Gras- oder StrohBallen, zur Verpackung von Koffern oder anderen Transportbehältnissen, zum Verpacken von auf Paletten stehenden Kraftfahrzeugen o.dgl. zur Anwendung gelangen. Wird der erfindungsgemäße Schlauch auf einem Wickelkanalelement vorgefertigt, so ist es in vorteilhafter Weise möglich, mit jeweils ähnlichen bzw. gleichen Kunststoff-Folienbahnen durch Änderung der Form bzw. der Abmessungen des Wickelkanalelementes die lichten Rohr-Querschnittsabmessungen in Anpassung an das zu verpackende Gut wunschgemäß zu variieren. Ausgehend von einer definierten Stärke der Kunststoff-Folienbahnen ist erfindungsgemäß in vorteilhafter Weise außerdem eine wunschgemäße Variation der Wandstärke der hergestellten Schlauchfolie durch den Grad der Überlappung der Kunststoff-Folienbahnen und/oder durch die Intensität der Vorreckung der Kunststoff-Folienbahnen möglich. Der Überlappungsgrad ist hierbei vom Verhältnis von Wickelgeschwindigkeit und Vorschub abhängig. Bei handelsüblichen Stretchfolien ist eine Vorreckung der Kunststoff-Folienbahnen bspw. bis größenordnungsmäßig 500 % realisierbar. Durch eine solche Vorreckung ergibt sich eine Festigkeitserhöhung der Folienbahnen in ihrer Längsrichtung.

Erfindungsgemäß können die äußere und die innere Kunststoff-Folienbahn mit ihren Längsrändern jeweils aneinander angrenzend gewickelt werden. Bei einer solchen Vorgehensweise ist die Wandstärke des fertigen Schlauches durch die Intensität der Vorreckung der Kunststoff-Folienbahnen wunschgemäß variier- bzw. einstellbar. Wie bereits erwähnt worden ist, können bei Durchführung des erfindungsgemäßen Verfahrens die äußere und die innere Kunststoff-Folienbahn mit ihren Längsrändern überlappend gewickelt werden, so daß die Stärke des erfindungsgemäß hergestellten Schlauches nicht nur durch die Intensität der Vorreckung der Kunststoff-Folienbahnen sondern auch durch den Grad der Überlappung wunschgemäß einstellbar ist. Gleichzeitig wird durch die Vorreckung - wie bereits erwähnt worden ist - die Festigkeit der Folienbahnen in ihrer Längsrichtung erhöht. Erfindungsgemäß geht also eine Wanddickenreduktion in vorteilhafter Weise mit einer Festigkeitserhöhung einher.

Wie ebenfalls bereits ausgeführt worden ist, können bei der Durchführung des erfindungsgemäßen Verfahrens die Kunststoff-Folienbahnen auf ein Wickelkanalelement aufgewickelt werden, das einen runden oder einen eckigen Kanalquerschnitt besitzen kann. Das Wickelkanalelement kann selbstverständlich jeden beliebigen, mehr oder weniger balligen Kanalquerschnitt besitzen. Es ist auch möglich, daß die Kunststoff-Folienbahnen unter Ausbildung eines Schlauches auf das jeweilige zu verpackende Gut direkt aufgewickelt werden.

Bei der Durchführung des erfindungsgemäßen Verfahrens können die Kunststoff-Folienbahnen auf das Wickelkanalelement im gleichen Wickelsinn gegeneinander axial versetzt aufgewickelt werden. Nachdem die Festigkeit der Folienbahnen durch die erwähnte Vorreckung nur in Längsrichtung der Folienbahnen erhöht wird, d.h. die Festigkeit der Folienbahnen in ihrer Querrichtung sich nicht erhöht, ergibt sich auf diese Weise ein Schlauch, bei welchem die Festigkeit in Querrichtung kleiner ist als in Längsrichtung der Folienbahnen. Eine solche unterschiedliche Festigkeit des Schlauches in Längs- und Querrichtung der Folienbahnen kann eliminiert werden, wenn die Kunststoff-Folienbahnen auf das Wickelkanalelement sich überkreuzend aufgewickelt werden. Durch eine solche sich überkreuzende Wicklung der Folienbahnen ergibt sich ein Schlauch, der in allen Richtungen eine mindestens annähernd gleich hohe Festigkeit besitzt. Ein solchermaßen hergestellter Kunststoff-Folienschlauch eignet sich bspw. ganz besonders gut zum dichten Einhüllen von Packgütern mit sich stark ändernden Konturen wie bspw. Personenkraftwagen usw.

Unabhängig davon, ob die Folienbahnen im gleichen Wickelsinne gegeneinander axial versetzt oder sich überkreuzend gewickelt werden, ergibt sich ein Schlauch, der an seiner Innenseite und der an seiner Außenseite kleberfrei ist.

Die Geschwindigkeit des Abzuges des Schlauches vom Wickelkanalelement muß mit dem Tempo der Folienumwicklung - unabhängig davon, ob gleichsinnig oder überkreuzend gewickelt wird - im Einklang stehen. D.h. wenn der Abzug unterbrochen wird, steht auch die Folienumwicklung still. Startet der Abzug, beginnt auch sofort die Folienumwicklung wieder zu laufen.

Der erfindungsgemäß hergestellte Schlauch aus Kunststoff-Folienbahnen kann bspw. auf voneinander beabstandete Vierkantballen aufgewickelt werden. Dabei wird der Wickelverbindungsabschnitt zwischen benachbarten, voneinander beabstandeten Vierkantballen mindestens annähernd mittig durchtrennt.

Dies kann zum einen dadurch erfolgen, daß die Wickelverbindungsabschnitte mit Hilfe von zwei vertikal beweglichen Holmen auf halber Ballenhöhe flachgelegt und anschließend zwischen den beiden Holmen mit einer geeigneten Schweißvorrichtung, z.B. Doppelschweißnaht mit mittiger Trennung, abgeschweißt und getrennt werden.

Zum anderen können die sich ergebenden Folienbahnüberstände an den einander zugewandten Stirnflächen der jeweils benachbarten Vierkantballen umgefaltet eingeschlagen und dicht verschweißt werden. Bei den genannten Vierkantballen handelt es sich z.B. um Stroh- oder Grasballen. Bei Strohballen dient der erfindungsgemäß hergestellte Schlauch zum Wetterschutz für die Strohballen. Bei Grasballen dient der erfindungsgemäß hergestellte Schlauch sowohl zur Realisierung eines Wetterschutzes als auch zum Silieren der Grasballen. Das erfindungsgemäße Verfahren kann mit einer an sich bekannten Vierkant-Ballenpresse kombiniert sein; es kann jedoch auch an einer von einer solchen Ballenpresse getrennten, unabhängigen Wickelmaschine durchgeführt werden.

Erfindungsgemäß kann ein Endlosschlauch hergestellt werden, der bspw. zum Verpacken von Silage verwendet wird. Hierbei kann die Silage kontinuierlich in den erfindungsgemäß hergestellten Endlos-Schlauch gepreßt werden, wobei sich das zur Herstellung des Schlauches dienende Wickelgerät von dem jeweils bereits gepreßten Schlauchvorderabschnitt abstößt und sich dem Vorschub entsprechend auf die zur Vorschubbewegung des Schlauches entgegengesetzte Richtung bewegt.

Weitere Einzelheiten ergeben sich aus der nachfolgenden Beschreibung von in der Zeichnung schematisch dargestellten Abschnitten des erfindungsgemäß hergestellten Schlauches sowie von Anwendungen des erfindungsgemäßen Schlauches an schematisch gezeichneten Maschinen. Es zeigen:
- Figur 1: schematisch in einer Seitenansicht teilweise aufgeschnitten ein Fahrzeug mit einer Ballenpresse und einer Wickelvorrichtung zum Umwickeln von Ballen,
- Figur 2: in einer Ansicht von oben eine andere Ausbildung eines Fahrzeuges mit einer Wickelvorrichtung zur Herstellung einer sog. Endloswicklung bzw. eines Endlosschlauches, der abgeschnitten gezeichnet ist, für Rundballen,
- Figur 3: abschnittweise einen Schlauch aus mindestens zwei Kunststoff-Folienbahnen in Kombination mit einer zugehörigen Wickelvorrichtung, wobei die Kunststoff-Folienbahnen axial gegeneinander versetzt im gleichen Wickelsinn auf ein (nicht gezeichnetes) Wickelkanalelement aufgewickelt und von diesem abgezogen werden,
- Figur 4: in einer der Figur 3 ähnlichen Darstellung abschnittweise einen Schlauch aus Kunststoff-Folienbahnen, die mit Hilfe einer geeignet ausgebildeten Wickelvorrichtung kreuzweise auf ein (nicht gezeichnetes) Wickelkanalelement aufgewickelt und von diesem abgezogen werden,
- Figuren 5, 6, 7 und 8: aufeinanderfolgende Verfahrensschritte zum allseitigen Verschließen benachbarter und voneinander beabstandeter Ballen mit einem Schlauch aus Kunststoff-Folienbahnen,
- Figuren 9, 10, 11 und 12: die den Figuren 5 bis 8 entsprechenden Verfahrensschritte in einer räumlichen Darstellung zur weiter verbesserten Verdeutlichung der einzelnen Verfahrensschritte,
- Figur 13: in einer Schnittdarstellung vergrößert und nicht maßstabsgerecht einen Abschnitt einer ersten Ausbildung des mit einer Vorrichtung gemäß Figur 1 oder 2 bzw. gemäß Fig. 3 oder 4 hergestellten Schlauches,
- Figur 14: in einer der Figur 13 ähnlichen Darstellung einen Abschnitt einer zweiten Ausführungsform des mit einer Vorrichtung gemäß Figur 1 oder 2 bzw. gemäß Figur 3 oder 4 hergestellten Schlauches, und
- Figur 15: in einer den Figuren 13 und 14 ähnlichen Darstellung einen Abschnitt einer dritten Ausbildung des mit einer Wickelvorrichtung gemäß Figur 1 oder 2 bzw. gemäß Figur 3 oder 4 hergestellten Schlauches.

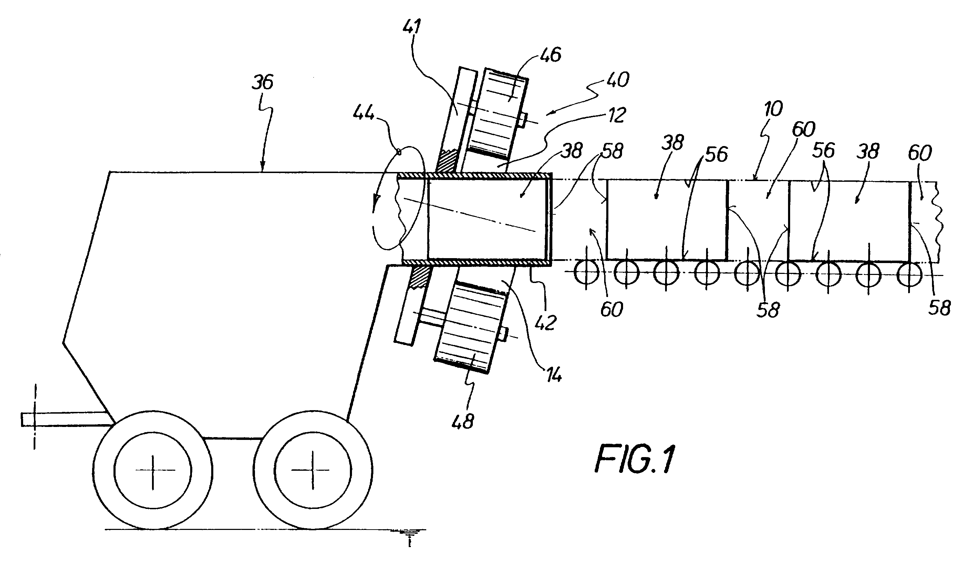

Figur 1 zeigt schematisch in einer Seitenansicht ein handelsübliches Fahrzeug 36 mit einer (nicht gezeichneten) Ballenpresse zur Herstellung von Stroh- oder Grasballen 38. Der Ballenpresse ist eine Wickelvorrichtung 40 nachgeordnet,die einen Drehkranz 41 aufweist, der um ein Wickelkanalelement 42 des Fahrzeuges 36 herum rotativ antreibbar ist. Diese Rotation des Drehkranzes 41 ist durch den bogenförmigen Pfeil 44 verdeutlicht.

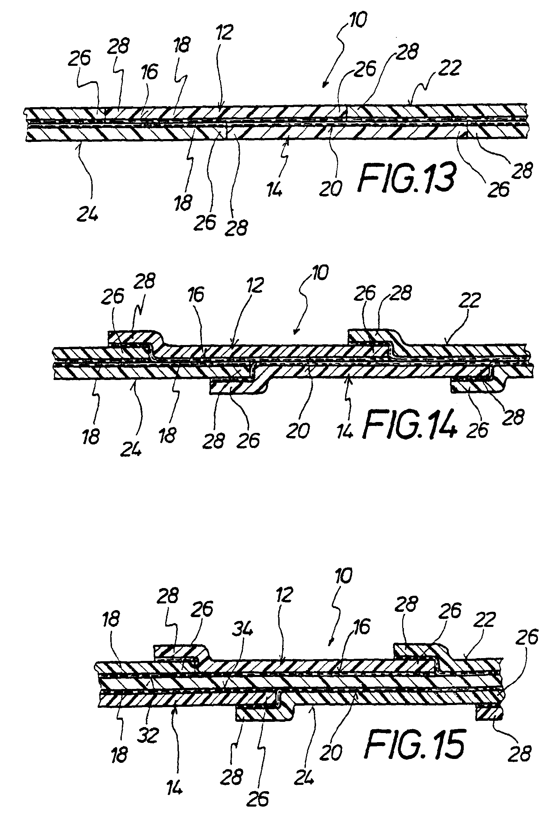

An dem dem Wickelkanalelement 42 zugeordneten Drehkranz 41 der Wickelvorrichtung 40 sind zwei Folienwickel 46 und 48 gelagert, von welchen eine äußere und eine innere Kunststoff-Folienbahn 12, 14 (sh. auch die Figuren 13 und 14) abgewickelt werden. Der Drehkranz 41 der Wickelvorrichtung 40 kann außer den Folienwickeln 46 und 48 auch noch einen dritten Folienwickel für die mittlere Kunststoff-Folienbahn 30 (sh. Figur 15) aufweisen.

Der Drehkranz 41 ist in Bezug auf das Wickelkanalelement 42 schräg geneigt angeordnet, um die Kunststoff-Folienbahnen 12 und 14 - und gegebenenfalls die mittige Kunststoff-Folienbahn 30 - im gleichen Wickelsinn schraubenlinienförmig, axial passend versetzt, wickeln zu können.

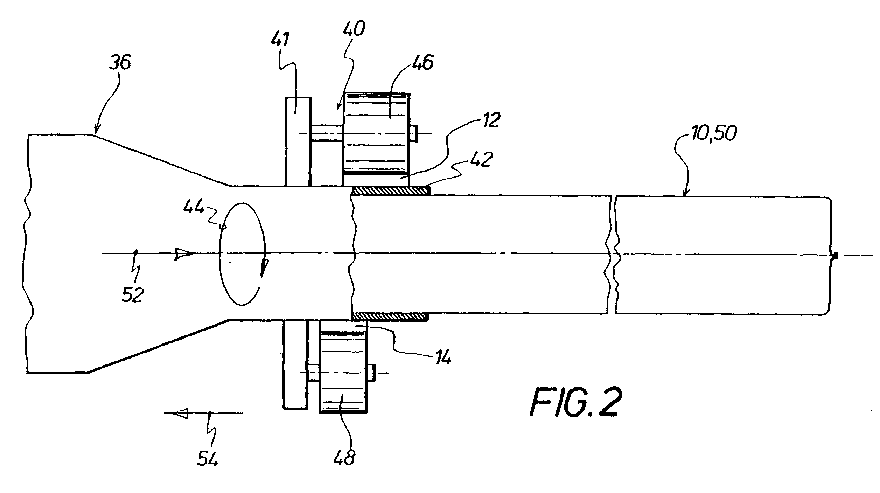

Figur 2 zeigt in einer Draufsicht ein Fahrzeug 36 mit einem Wickelkanalelement 42, das einen kreisrunden lichten Querschnitt besitzt. Demgegenüber zeigt die Figur 1 ein Wickelkanalelement 42 mit einem viereckigen lichten Kanalquerschnitt für Ballen 38. Dem Wickelkanalelement 42 kreisrunden lichten Kanalquerschnitts (sh. Figur 2) ist eine Wickelvorrichtung 40 mit einem Drehkranz 41 zugeordnet, an welchem Folienwickeln 46, 48 angeordnet sind. Auch hier werden die Kunststoff-Folienbahnen 12 und 14 - und gegebenenfalls zusätzlich eine mittlere Folienbahn 30 (sh. Fig. 15) im gleichen Wickelsinn axial gegeneinander geeignet versetzt auf das Wickelkanalelement 42 aufgewickelt. Mit Hilfe dieser Wickelvorrichtung 40 wird ein Endlosschlauch 50 gewickelt, der abgeschnitten angedeutet ist. In den Endlosschlauch 50 wird das Füllgut, bei dem es sich um Silage handeln kann, kontinuierlich hineingepreßt, was durch den Pfeil 52 angedeutet ist.

Gleichzeitig stößt sich die Wickelvorrichtung 40 gleichsam relativ vom jeweiligen vollgepressten Schlauchabschnitt 50 ab, d.h. sie bewegt sich entsprechend dem Vorschub gemäß Pfeil 52 relativ in die entgegengesetzte Richtung, was durch den Pfeil 54 angedeutet ist.

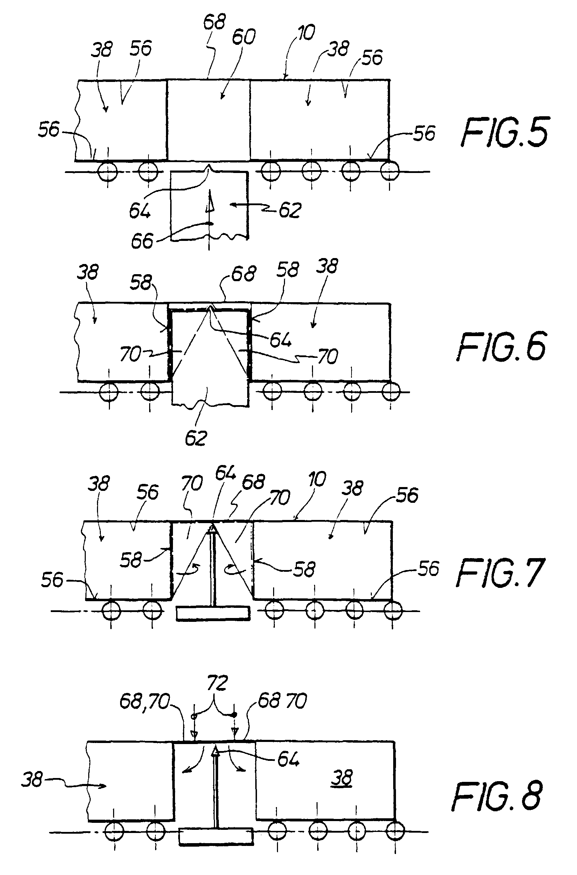

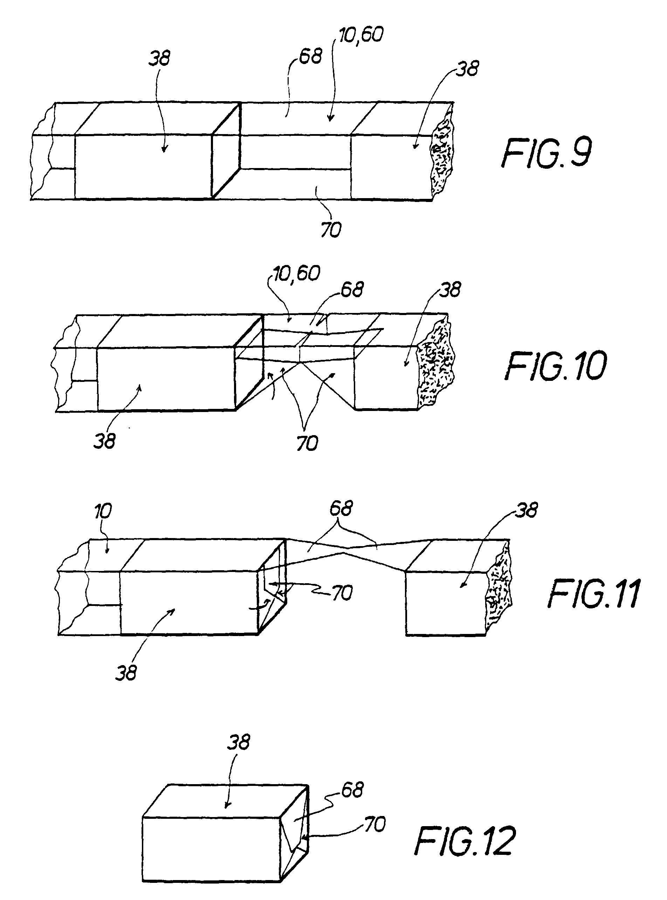

Wie aus Figur 1 ersichtlich ist, weisen die einzelnen Ballen 38 voneinander einen bestimmten Abstand auf, d.h. sie sind voneinander entkoppelt. Der Abstand zwischen den benachbarten Ballen 38 ist von den Querschnittsabmessungen des zu umwickelnden Gutes bzw. von den Querschnittsabmessungen der einzelnen Ballen 38 abhängig, er kann mehr als einen Meter betragen. Die Entkopplung der benachbarten Ballen 38 ist insbes. dann notwendig, wenn nicht nur die Umfangsmantelfläche 56 der einzelnen Ballen 38 mit einem Schlauch 10 umwickelt wird, sondern wenn außerdem auch die einander zugewandten Stirnseiten 58 der einzelnen Ballen 38 mit den entsprechenden Schlauchabschnitten eingeschlagen und dicht verschlossen werden. Das ist in den Figuren 5 bis 8 bzw. in den Figuren 9 bis 12 verdeutlicht.

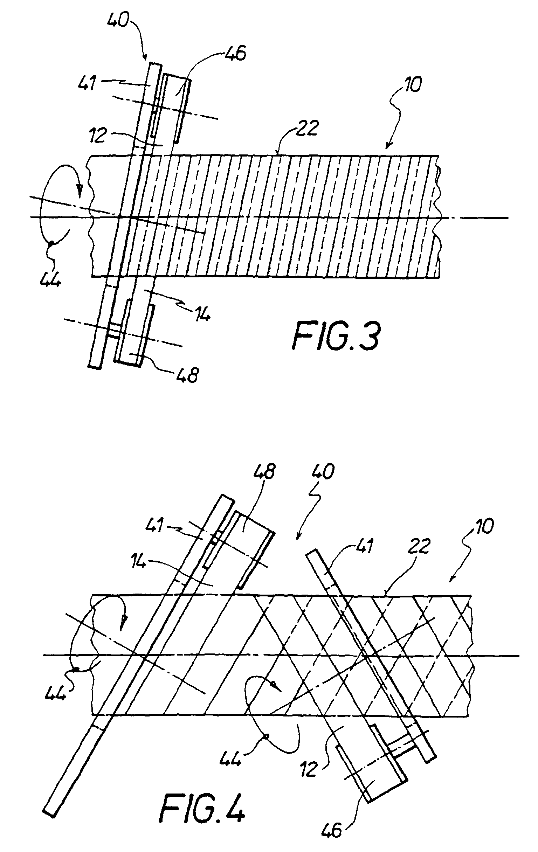

Fig. 3 zeigt abschnittweise einen Schlauch 10 bestehend aus Kunststoff-Folienbahnen 12 und 14, die von Folienwickeln 46, 48 im gleichen Wickelsinne gegeneinander axial versetzt abgewickelt, d.h. auf ein nicht gezeichnetes Wickelkanalelement aufgewickelt und von diesem als Schlauch 10 abgezogen werden. Die beiden Folienwickel 46, 48 sind an einem Drehkranz 41 einer Wickelvorrichtung 40 drehbar gelagert. Der Drehkranz 41 ist gegen die Längsachse des Schlauches 10 geneigt angeordnet und um seine Mittelachse rotativ antreibbar, was durch den bogenförmigen Pfeil 44 verdeutlicht ist.

Mit der Bezugsziffer 22 ist die kleberfreie Außenseite des quasi endlosen Schlauches 10 bezeichnet. Wie bereits weiter oben beschrieben worden ist, ist der Schlauch 10 auch an seiner Innenseite kleberfrei.

Fig. 4 zeigt in einer der Fig. 3 ähnlichen Darstellung abschnittweise einen quasi endlosen Schlauch 10 aus Kunststoff-Folienbahnen 12 und 14. Bei den Kunststoff-Folienbahnen 12 und 14 handelt es sich bspw. um geeignet vorgereckte Kunststoff-Folienbahnen, die auf zugehörige Folienwickel 46, 48 aufgewickelt und von den besagten Folienwickeln 46, 48 abgewickelt werden. Der Folienwickel 46 ist an einem ersten Drehkranz 41 und der Folienwickel 48 ist an einem zweiten Drehkranz 41 der Wickelvorrichtung 40 drehbar gelagert. Die beiden Drehkränze 41 sind um ihre Mittelachse rotativ antreibbar, was auch in Fig. 4 durch die bogenförmigen Pfeile 44 verdeutlicht ist. Die Drehkränze 41 sind voneinander in axialer Richtung des Schlauches 10 bzw. eines (nicht gezeichneten) Wickelkanalelementes voneinander axial beabstandet angeordnet. Jeder Drehkranz 41 schließt mit der besagten Längsachse des Schlauches 10 bspw. einen Winkel von größenordnungsmäßig 45 bis 60° ein. Die Drehkränze 41 schließen somit miteinander einen Winkel von größenordnungsmäßig 60 bis 90° ein. Durch eine solche Orientierung der Drehkränze 41 der Wickelvorrichtung 40 ergibt sich ein Schlauch 10 mit sich überkreuzenden Kunststoff-Folienbahnen 12 und 14. Diese Überkreuzung der Kunststoff-Folienbahnen 12, 14 weist den Vorteil auf, daß bei vorgereckten Kunststoff-Folienbahnen 12, 14 mit entsprechend vergrößerter Festigkeit in Folienbahn-Längsrichtung durch die kreuzweise Wicklung und Verklebung der Kunststoff-Folienbahn 12, 14 die Festigkeit in Querrichtung jeder der Kunststoff-Folienbahnen 12, 14 durch die entsprechende Längsrichtungs-Festigkeit entsprechend verbessert ist. Durch diese kreuzweise Wicklung und Verklebung der Kunststoff-Folienbahn 12, 14 ergibt sich somit ein Schlauch 10, der gleichsam in allen Richtungen eine ausgezeichnete Festigkeit besitzt.

Figur 5 zeigt zwei voneinander beabstandete Ballen 38, von welchen der auf der linken Seite gezeichnete Ballen 38 nur abschnittweise dargestellt ist. Der Schlauch 10 bedeckt die Umfangsmantelfläche 56 jedes Ballens 38. Der Schlauch 10 erstreckt sich jedoch außerdem auch mit einem entsprechenden Wickelverbindungsabschnitt 60 zwischen den benachbarten und voneinander beabstandeten Vierkantballen 38. Dieser Wickelverbindungsabschnitt 60 zwischen benachbarten und voneinander beabstandeten Vierkantballen 38 kann dadurch realisiert werden, daß der sich beispielsweise bei kontinuierlich ablaufendem Pressvorgang ergebende Mehrbedarf an Schlauch 10 zur Überbrückung des Abstandes zwischen den benachbarten Ballen 38 durch eine Erhöhung der Umlaufgeschwindigkeit der Wickelvorrichtung 40 und eine daran angepaßte Erhöhung des Ballenvorschubs realisiert wird. Der Wickelprozeß muß abgeschlossen sein, bevor der nächste Vierkantballen 38 aus dem Wickelkanalelement 42 (sh. Figur 1) austritt und mit seinem Ballenvorschub wieder die Abzugsgeschwindigkeit des Schlauches 10 sowie die Umlaufgeschwindigkeit der Wickelvorrichtung 40 festlegt. Der jeweilige Vierkantballen 38 wird also mit einer Teillänge vorzeitig aus dem Wickelkanalelement 42 herausgezogen. Gleichzeitig setzt der schnellere Wickelvorgang, was den Vorschub und die Rotation der Wickelvorrichtung 40 anbelangt, ein, so daß die Kunststoff-Folienbahnen 12 und 14 (sh. die Figuren 13 und 14) - und gegebenenfalls zusätzlich die Kunststoff-Folienbahn 30 (sh. Figur 15) - für die Restlänge des jeweiligen Vierkantballens 38 und für den Wickelverbindungsabschnitt 60 des Schlauches 10 gewickelt werden, bevor der nächste Vierkantballen 38 aus dem Wickelkanalelement 42 austritt.

Wie aus Figur 5 ersichtlich ist, wird zwischen den voneinander beabstandeten Vierkantballen 38 ein abschnittweise gezeichneter Stempel 62, der mit einem beheizten Trennmesser 64 versehen ist, in den Wickelverbindungsabschnitt 60 hineinbewegt. Das ist in Figur 5 durch den Pfeil 66 angedeutet. Dabei wird der Schlauch 10 im Bereich des Wickelverbindungsabschnittes 60 mit Hilfe des Trennmessers 64 mittig bis kurz vor den oberen Folienabschnitt 68 dreiseitig aufgeschnitten. Mit Hilfe des Stempels 62 werden gleichzeitig die entsprechenden Folienbahnüberstände 70 nach oben gedrückt und an die Stirnseiten 58 der Vierkantballen 38 angelegt, wie aus Figur 6 ersichtlich ist. Im nächsten, in Figur 7 gezeichneten Verfahrensschritt wird der obere Folienabschnitt 68 durch das Trennmesser 64 von zwei Seiten her aufgetrennt, so daß nur ein mittlerer Abschnitt des oberen Folienabschnittes 68 stehen bleibt. Anschließend werden die Folienbahnüberstände 70 beispielsweise mit Hilfe von Klappenelementen nach innen geklappt, so daß die Folienbahnüberstände 70 an den Stirnseiten 58 der Vierkantballen 38 eng anliegen. Hierbei handelt es sich also um eine an die erste Faltung gemäß Figur 6 anschließende zweite Faltung der Folienbahnüberstände 70. Gleichzeitig mit dieser zweiten Faltung, die beispielsweise in horizontaler Ebene erfolgt, erfolgt eine Verschweißung der zweimal gefalteten Folienbahnüberstände 70. Anschließend werden die Folienbahnüberstände 70 beispielsweise mittels zweier Klappen nach unten gedrückt, was in Figur 8 durch die Pfeile 72 angedeutet ist.

Gleichzeitig wird der noch nicht durchgeschweißte Abschnitt gegen das ortsfest stehende Trennmesser 64 gedrückt und abgetrennt. Während dieses dritten Faltvorgangs der Folienbahnüberstände 70 erfolgt gleichzeitig wieder eine entsprechende Verschweißung.

Durch die mehrfache Überlappung der Folienbahnüberstände 70 des Wickelverbindungsabschnitte 60 zwischen benachbarten Vierkantballen 38 ergibt sich eine zuverlässige allseitige Abdichtung des jeweiligen Vierkantballens 38, so daß ein Eindringen von Wasser und Luft in den mit dem Schlauch 10 verpackten Vierkantballen 38 zuverlässig ausgeschlossen ist.

Die Figuren 9 bis 12 verdeutlichen in einer räumlichen Darstellung die einzelnen Verfahrensschritte gemäß den Figuren 5 bis 8, so daß es sich erübrigt, in Verbindung mit den Figuren 9 bis 12 alle Einzelheiten, wie sie in Verbindung mit den Figuren 5 bis 8 dargestellt und beschrieben sind, noch einmal zu beschreiben. Die Figuren 10, 11 und 12 verdeutlichen hierbei insbes. die erste, die zweite und die dritte Faltung der zu einem Vierkantballen 38 zugehörigen Folienbahnüberstände 70.

Zweckmäßigerweise kann eine Verschweißung über die Diagonalen der Stirnseiten 58 zur Abdeckung des Ballens 38 erfolgen. Dadurch wird eine Faltenbildung vermieden. Hierbei können zwei (nicht dargestellte) Schweißbalken an den äußeren Eckpunkten beginnend diagonal mittig zusammenkommen.

Bei dieser diagonalen Folienschlauchverschweißung und gleichzeitiger Teilung (Trennung) der Verschweißungsfläche ist eine Verlängerung des Wickelkanalelementes erforderlich, und zwar so weit, bis der durch den Kanal geführte Ballen 38 zur Verschweißung seiner Stirnseite 58 eben herausragt. Diese Kanalverlängerung ist erforderlich, damit bei der diagonalen Verschweißung der auf dem Wickelkanalelement 42 befindliche Folienschlauch leicht abziehbar ist.

Sollte die erforderliche Schlauchgleitfähigkeit bei einem gerade gebauten Wickelkanalelement 42 nicht genügen, dann ist es zweckmäßig, das Wickelkanalelement 42 etwas konisch zu gestalten.

Die Ballenführung durch das verlängerte Wickelkanalelement 42 kann auf verschiedene Arten, beispielsweise hydraulisch (ähnlich dem hydraulischen Ballenausstoß bei bekannten Pressen) erfolgen.

Figur 13 zeigt längsgeschnitten einen Abschnitt eines Schlauches 10, der aus einer äußeren Kunststoff-Folienbahn 12 und aus einer inneren Kunststoff-Folienbahn 14 besteht. Die äußere Kunststoff-Folienbahn 12 ist an ihrer der inneren Kunststoff-Folienbahn 14 zugewandten Innenseite 16 mit einem Kleber 18 versehen. Die innere Kunststoff-Folienbahn 14 ist an ihrer der äußeren Kunststoff-Folienbahn 12 zugewandten Außenseite 20 ebenfalls mit einem Kleber 18 versehen.

Die äußere Kunststoff-Folienbahn 12 und die innere Kunststoff-Folienbahn 14 werden schraubenlinienförmig, axial gegeneinander versetzt, sich überlappend auf das Wickelkanalelement 42 (sh. Figuren 1 und 2) derart gewickelt, daß der fertige Schlauch 10 an seiner Außenseite 22 und an seiner Innenseite 24 kleberfrei ist. Dabei können die Kunststoff-Folienbahnen 12 und 14 gleichsinnig, d.h. im gleichen Winkel zueinander parallel gewickelt werden. Es ist jedoch auch möglich, die Kunststoff-Folienbahnen 12 und 14 sich überkreuzend zu wickeln, um insbes. bei vorgereckten Kunststoff-Folienbahnen 12 und 14 nicht nur in Folienlängsrichtung eine ausgezeichnete Festigkeit zu erzielen, sondern auch in Querrichtung der Folienbahnen, weil dann die Längsfestigkeit der einen Folienbahn die vergleichsweise kleine Festigkeit in Querrichtung bei der anderen Folienbahn - und umgekehrt - ausgleicht, wie bereits weiter oben in Verbindung mit Fig. 4 ausgeführt worden ist.

Gemäß Figur 13 sind die äußere Kunststoff-Folienbahn 12 und die innere Kunststoff-Folienbahn 14 mit ihren Längsrändern 26 und 28 zueinander parallel oder sich überkreuzend derart gewickelt, daß sie jeweils aneinander angrenzen. Im Vergleich hierzu zeigt die Figur 14 einen Abschnitt des Schlauches 10 aus einer äußeren Kunststoff-Folienbahn 12 und einer inneren Kunststoff-Folienbahn 14, deren Längsränder 26 und 28 nicht aneinander anstoßen, sondern bei welchem sich die Längsränder 26 und 28 überlappen. Im übrigen ist die Ausbildung des Schlauches 10 gemäß Figur 14 der in Figur 13 gezeichneten Ausführungsform des Schlauches 10 ähnlich, so daß die weiteren Einzelheiten, die in Figur 14 mit denselben Bezugsziffern wie in Figur 13 bezeichnet sind, nicht noch einmal detailliert beschrieben werden.

Figur 15 zeigt in einer den Figuren 13 und 14 ähnlichen Darstellung einen Abschnitt des Schlauches 10 mit einer mittleren Kunststoff-Folienbahn 30, die an ihren beiden Seiten 32 und 34 jeweils mit einem Kleber 18 versehen ist, und die mit einer äußeren Kunststoff-Folienbahn 12 und mit einer inneren Kunststoff-Folienbahn 14 gemeinsam schraubenlinienförmig, axial gegeneinander versetzt, sich überlappend, auf ein Wickelkanalelement 42 (sh. Figuren 1 und 2) gewickelt sind. Auch bei einer solchen Ausbildung können die Kunststoff-Folienbahnen 12, 14 und 30 im gleichen Wickelsinn zueinander parallel oder sich überkreuzend gewickelt werden, um eine gleichmäßige hohe Festigkeit des Schlauches 10 in allen Richtungen zu erzielen.

Bei der Ausbildung des Schlauches 10 gemäß Figur 15 überlappen sich außerdem die Längsränder 26 und 28 der äußeren und der inneren Kunststoff-Folienbahn 12 und 14. Eine solche Überlappung der Längsränder 26 oder 28 ist selbstverständlich nur sinnvoll, wenn die besagte äußere und die innere Kunststoff-Folienbahn 12 und 14 an den einander zugewandten Seiten 16 und 20 jeweils mit einem Kleber 18 versehen sind. Dann kann auf den Kleber 18 an den beiden Seiten 32 und 34 der mittleren Kunststoff-Folienbahn 10 verzichtet werden.

Gleiche Einzelheiten sind auch in Figur 15 mit denselben Bezugsziffern wie in den Figuren 13 und 14 bezeichnet, so daß es sich erübrigt, in Verbindung mit Figur 15 alle diese Einzelheiten noch einmal detailliert zu beschreiben.

## Patentansprüche

1. Verfahren zur Herstellung eines Schlauches aus Kunststoff-Folienmaterial, wobei eine äußere und eine innere Kunststoff-Folienbahn (12, 14), schraubenlinienförmig, axial gegeneinander versetzt, sich überlappend gewickelt werden,
**dadurch gekennzeichnet,**
daß mindestens eine der beiden voneinander unabhängigen, gleichzeitig gewickelten Kunststoff-Folienbahnen (12, 14) an ihrer der anderen Kunststoff-Folienbahn zugewandten Seite (16, 20) einen Kleber (18) aufweist, und die Kunststoff-Folienbahnen (12, 14) so gewickelt werden, daß der Schlauch (10) an seiner Außen- und an seiner Innenseite (22, 24) kleberfrei ist.

2. Verfahren nach Anspruch 1,
**dadurch gekennzeichnet,**
daß eine äußere und eine innere Kunststoff-Folienbahn (12, 14) verwendet werden, von welchen jede an ihrer der anderen Kunststoff-Folienbahn (12, 14) zugewandten Seite (16, 20) einen Kleber (18) aufweist.

3. Verfahren nach dem Oberbegriff des Anspruchs 1,
**dadurch gekennzeichnet,** daß eine mittlere Kunststoff-Folienbahn (30), die an ihren beiden Seiten (32, 34) jeweils einen Kleber (18) aufweist, mit einer äußeren und einer inneren Kunststoff-Folienbahn (12, 14) schraubenlinienförmig, axial gegeneinander versetzt, sich überlappend gleichzeitig derart gewickelt werden, daß der Schlauch (10) an seiner Außen- und an seiner Innenseite (22, 24) kleberfrei ist.

4. Verfahren nach einem der Ansprüche 1 bis 3,
**dadurch gekennzeichnet,**
daß die äußere und die innere Kunststoff-Folienbahn (12, 14) mit ihren Längsrändern (26, 28) jeweils aneinander angrenzend gewickelt werden.

5. Verfahren nach einem der Ansprüche 1 bis 3,
**dadurch gekennzeichnet,**
daß die äußere und die innere Kunststoff-Folienbahn (12, 14) mit ihren Längsrändern (26, 28) überlappend gewickelt werden.

6. Verfahren nach einem der Ansprüche 1 bis 5,
**dadurch gekennzeichnet,**
daß die Kunststoff-Folienbahnen (12, 14, 30) gereckt werden.

7. Verfahren nach einem der Ansprüche 1 bis 6,
**dadurch gekennzeichnet,**
daß die Kunststoff-Folienbahnen (12, 14, 30) auf ein einen runden oder eckigen Querschnitt aufweisendes Gut aufgewickelt werden.

8. Verfahren nach einem der Ansprüche 1 bis 6,
**dadurch gekennzeichnet,**
daß die Kunststoff-Folienbahnen (12, 14, 30) auf ein einen runden oder einen eckigen Kanalquerschnitt aufweisendes Wickelkanalelement (42) aufgewickelt werden.

9. Verfahren nach einem der Ansprüche 1 bis 8,
**dadurch gekennzeichnet,**
daß die Kunststoff-Folienbahnen im gleichen Wickelsinn gegeneinander axial versetzt zu einem Schlauch (10) gewickelt werden.

10. Verfahren nach einem der Ansprüche 1 bis 8,
**dadurch gekennzeichnet,**
daß die Kunststoff-Folienbahnen sich überkreuzend zu einem Schlauch (10) gewickelt werden.

## Claims

1. Process for manufacturing a tube from plastic film material, an outer and an inner plastic film web (12, 14) being wound helically in such a way that they are axially offset with respect to one another and overlap one another, characterized in that at least one of the two plastic film webs (12, 14) simultaneously wound independently of one another has an adhesive (18) on its side (16, 20) facing the other plastic film web, and the plastic film webs (12, 14) are wound in such a way that the tube (10) is free of adhesive on its outer side (22) and on its inner side (24).

2. Process according to Claim 1, characterized in that an outer and an inner plastic film web (12, 14) are used, each of which has an adhesive (18) on its side (16, 20) facing the other plastic film web (12, 14).

3. Process according to the precharacterizing clause of Claim 1, characterized in that a middle plastic film web (30), which has an adhesive (18) on each of its two sides (32, 34) is wound simultaneously with an outer and an inner plastic film web (12, 14) helically in such a way that they are axially offset with respect to one another and overlap one another and that the tube (10) is free of adhesive on its outer side (22) and on its inner side (24).

4. Process according to one of Claims 1 to 3, characterized in that the outer and inner plastic film webs (12, 14) are wound with their longitudinal edges (26, 28) respectively butting against one another.

5. Process according to one of Claims 1 to 3, characterized in that the outer and inner plastic film webs (12, 14) are wound with their longitudinal edges (26, 28) overlapping.

6. Process according to one of Claims 1 to 5, characterized in that the plastic film webs (12, 14, 30) are stretched.

7. Process according to one of Claims 1 to 6, characterized in that the plastic film webs (12, 14, 30) are wound onto an article having a round or angular cross section.

8. Process according to one of Claims 1 to 6, characterized in that the plastic film webs (12, 14, 30) are wound onto a winding channel element (42) having a round or angular channel cross section.

9. Process according to one of Claims 1 to 8, characterized in that the plastic film webs are wound in the same winding direction in such a way that they are axially offset with respect to one another to form a tube (10).

10. Process according to one of Claims 1 to 8, characterized in that the plastic film webs are wound in such a way that they cross over one another to form a tube (10).

## Revendications

1. Procédé pour la fabrication d'un tuyau en matière synthétique en feuille, du type dans lequel une ligne intérieure et une ligne extérieure de feuille de matière synthétique (12, 14) sont enroulées hélicoïdalement en étant décalées axialement l'une par rapport à l'autre et en se chevauchant, **caractérisé en ce** qu'au moins l'une des deux lignes de feuilles de matière synthétique enroulées simultanément et indépendamment l'une de l'autre (12, 14) comporte une colle (18) sur son côté (16, 20) orienté vers l'autre ligne de feuille de matière synthétique, et en ce que les lignes de feuille de matière synthétique (12, 14) sont enroulées de manière telle, que le tuyau (10) est exempt de colle sur son côté extérieur et son côté intérieur (22, 24).

2. Procédé selon la revendication 1, caractérisé en ce que l'on utilise une ligne extérieure et une ligne intérieure de matière synthétique en feuille (12, 14) dont chacune comporte une colle (18) sur son côté (16, 20) orienté vers l'autre ligne de matière synthétique en feuille (12, 14).

3. Procédé selon la revendication 1, caractérisé en ce qu'une ligne intermédiaire (30) de matière synthétique en feuille, qui comporte une colle (18) sur chacun de ses deux côtés (32, 34) est enroulée simultanément avec une ligne extérieure et une ligne intérieure (12, 14) de matière synthétique en feuille, hélicoïdalement, en étant décalées axialement les unes par rapport aux autres et en se chevauchant, et en ce que le tuyau (10) est exempt de colle sur ses côtés extérieur et intérieur (22, 24).

4. Procédé selon l'une des revendications 1 à 3, caractérisé en ce que les lignes extérieure et intérieure (12, 14) de matière synthétique en feuille sont enroulées de manière que chacune de leurs lisières longitudinales (26, 28) soit contiguë avec l'autre.

5. Procédé selon l'une des revendications 1 à 3, caractérisé en ce que les lignes extérieure et intérieure de matière synthétique en feuille (12, 14) sont enroulées de manière que leurs lisières longitudinales (26, 28) se chevauchent.

6. Procédé selon l'une quelconque des revendications 1 à 5, caractérisé en ce que les lignes de matière synthétique en feuille (12, 14, 30) sont étirées.

7. Procédé selon l'une des revendications 1 à 6, caractérisé en ce que les lignes de matière synthétique en feuille (12, 14, 30) sont enroulées sur un produit présentant une section transversale ronde ou angulaire.

8. Procédé selon l'une quelconque des revendications 1 à 6, caractérisé en ce que les lignes de matière synthétique en feuille (12, 14, 30) sont enroulées sur un élément de bobine creuse (42) présentant un canal dont la section transversale est ronde ou angulaire.

9. Procédé selon l'une des revendications 1 à 8, caractérisé en ce que les lignes de matière synthétique en feuille sont enroulées, pour former le tuyau (10) dans le même sens en étant décalées axialement l'une par rapport à l'autre.

10. Procédé selon l'une des revendications 1 à 8, caractérisé en ce que les lignes de matière synthétique en feuille sont enroulées en se recroisant pour former le tuyau (10).
